# EUROPEAN PATENT SPECIFICATION

(11) **EP 0 584 643 B1**
(45) Date of publication and mention of the grant of the patent: **23.04.1997**
(21) Application number: 93112821.9
(22) Date of filing: 10.08.1993
(51) Int. Cl.: B23K 9/09

(54) **Welding method and welding robot**
Schweissverfahren und Schweissroboter
Méthode de soudage et robot de soudage

(30) Priority: 10.08.1992 JP 232672/92
(43) Date of publication of application: 02.03.1994
(73) Proprietor: YAMAHA HATSUDOKI KABUSHIKI KAISHA, Iwata-shi Shizuoka-ken, 438 (JP)
(72) Inventor: Mitsui, Noboru, Iwata-shi, Shizuoka-ken (JP); Kajiyama, Masahiro, Iwata-shi, Shizuoka-ken (JP); Ohno, Masahiro, Iwata-shi, Shizuoka-ken (JP)
(74) Representative: Grünecker, Kinkeldey, Stockmair & Schwanhäusser Anwaltssozietät

(56) References cited:
- EP-A- 0 148 315
- US-A- 2 886 696
- INTERNATIONAL INSTITUTE OF WELDING-COMMISSION XII "SPECIAL ARC WELDING PROCESSES" no. 12 , 1966 , MOSCOW pages 1 - 27 CAND. TECHN. SCI. A. V. PETROV 'The welding of sheet materials, using a pulse-type arc'
- INTERNATIONAL INSTITUTE OF WELDING-COMMISSION XII "SPECIAL ARC WELDING PROCESSES" no. 12 , 1966 , MOSCOW pages 1 - 27 CAND. TECHN. SCI. A. V. PETROV 'The welding of sheet materials, using a pulse-type arc' page 3,page 7-page 8, page 10-page 12;figures 1-3

## Description

The present invention relates to a welding method for welding metal workpieces wherein a welding arc is generated between a welding torch electrode and the metal workpieces, preferably under a gas shielded atmosphere as indicated in the preamble of claim 1. Moreover, the present invention relates to a welding robot as indicated in the preamble portion of claim 9.

Conventional welding methods, frequently performed by welding robots, form welds (welding seams) by continuously advancing movement of the welding torch of a robot unit relative to the respective workpiece. Accordingly, most of the welding robots in the past, for example for automatic gas shield arc welding such as MAG welding, have been of the type of construction to move the welding torch by means of robot unit relative to the workpiece material to be welded and to control the action of the robot unit according to the thickness of the workpiece material, diametres of welding wires used, etc. When two workpieces are to be joined by butt welding using such a type of welding robot, the two workpieces are mated tightly to eliminate any gap in the butt joint area and the welding torch is directed to that area. However, when two thin sheet metals of about 0.6mm - 0.8mm thickness are welded using such a kind of conventional welding robot and method there is a problem that openings or undercuts leading to a lowering of the strength of the welded area (welding seam) are likely to occur. This results from an excessive amount of input welding heat relative to the thickness of the work piece material. In other words if there is even a small gap between the two components to be welded as it normally occurs in case of butt welding, it is likely that molten weld penetrates the workpiece material or the workpiece material itself melts and drops.

To certain extent such problems in welding thin sheet metals could be avoided and that process stabilised by setting strictly accurate or narrow welding conditions. However, as said welding conditions comprise a welding current amperage, welding voltage, welding speed, shape accuracy of the work, accuracy of the welding jigs and aimed welding position of the welding torch there are limitations in ensuring high accuracy of said factors. Moreover, meeting high accuracy needs, specifically in workshape would lower the effeciency of mass production.

A welding method as mentioned above is already known from International Institute of Welding - Commission XII - "Special arc welding processes" Doc. XII-357-66; The welding of sheet materials, using a pulse-type arc; Cand.techn. sci.A.V. PETROV; USSR National Welding Committee; Moscow 1966, wherein it is described a gas shielded arc welding method for welding metal workpieces. The welding arc is generated with predetermined standard argon arc pulse lengths and intervals in order to compose a row of welding beads partially overlapping one another.

A welding robot as mentioned above is already known from document US-A-2 886 696. Said document describes a welding gun for supporting a welding torch electrode, a source of electrical power for generating a welding arc between said welding torch electrode under the workpiece and an inductance in order to control a predetermined oscillation of arc on times and arc off times.

Therefore, it is an objective of the present invention to provide a welding method and associated welding robot capable of reliably welding workpieces without attributing same to thermal overloads or meeting extremely accurate settings of welding conditions including high accuracy of the workpieces to be welded.

According to the present invention the above objective, in its method aspects, is performed in that the welding arc is generated and the welding bead is welded keeping the welding torch with the welding torch electrode stationary, said welding arc being shut off in response to a predetermined period of time (arc on time) or alternatively a predetermined arc energy, and that the welding torch is advanced to an arc resuming spot and that the welding arc generation then is restarted.

By such a method, specifically applicable to shielding gas arc welding, a plurality of advantages can be obtained. First of all, the welding heat input to the workpieces is reduced so that even thin sheet metals can be welded together without suffering melting damage or undercuts in the weld. Moreover, as the welding arc is established for a next welding bead on a preceding already finished welding bead the strength of the weld can be increased without any openings remaining so that the welding quality is raised, even specifically when thin sheet metals are welded together.

Further preferred embodiments of the present welding method are laid down in the further sub-claims.

In order to perform the above objective in terms of apparatus aspects the present invention provides a welding robot as indicated above which, according to the present invention, is improved in that said means is a needle pulse controller which is alternatively provided for intermittently generating a welding arc in response to a predetermined amount of arc energy calculated from the welding current and the welding voltage therein, wherein the welding arc is generated and the welding bead is welded keeping the welding torch with the welding torch electrode stationary, and in that the welding torch is advanced to an arc resuming spot, by means of the robot main unit preferably on a circumference line of the finished welding bead generated during the preceding welding operation, and in that means is provided for restarting then the welding arc generation.

A Preferred embodiment of the welding robot is laid down in claim 10.

In the following the present invention is explained in greater details by means of several embodiments thereof in conjunction with the accompanying drawing wherein:
Figure 1 is a scheme of welding robot according to an embodiment of the present invention,
Figure 2 is a schematic illustration of the welding process according to an embodiment of the present invention carried out using the weld robot of figure 1 and indicating a graph showing welding current/time diagram.
Figure 3, is a graph showing the welding current versus time during welding,
Figures 4a - 4d are explanatory schematic views of the wire and conditions during welding, respectively showing the formation of the welding arc with respect to the points a,b,c and d in figure 3.
Figures 5a - 5c are enlarged views of a welding seam wherein figure 5c shows a welding seam produced by a conventional method comprised in the art whereas figures 5a and b show plan views of welding seams produced according to the method and using the welding robot according to the embodiment of the present invention,
Figure 6 is the flow chart showing the welding method using the welding robot, according to a first embodiment of the present invention,
Figure 7 is the flow chart showing the welding methods using the welding robot, according to a second embodiment of the present invention, and
Figure 8 table of comparison between samples obtained by a conventional method and a method according to an embodiment of the present invention.

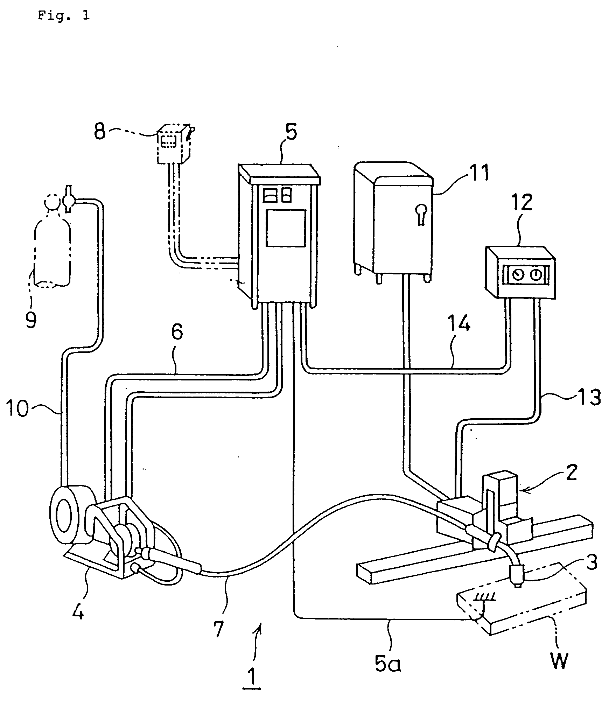

In Figure 1 schematically the structure of a welding robot 1 according to this embodiment is shown which comprises several conventional components of a MAG automatic welding robot which is additionally equipped with a needle pulse controller 12 as described later on. The welding robot 1 comprises a robot main unit 2 which comprises a welding torch 3 supported to be moveable relative to a workpiece W to be welded. Said robot main unit 2 and the welding torch 3 are of conventional construction.

Welding wire feeder 4 is provided for feeding welding wire to the torch 3 and a power source unit 5 is provided for supplying electrical power to the wire feeder for the robot main unit 2 and the other components of the welding robot 1. A welding current and the welding voltage are controlled through the power source unit 5 and the welding current is applied to the robot main unit 2 through a power cable 6 and a torch cable 7 to which the welding wire forgue is fed. Three phase 200 volt alternate current power source 8 is connected to the power source unit 5. Ground cable 5a connects ground circuit (not shown) of the power source unit 5 to the workpiece W to be welded.

A shielded gas container 9 is connected to the wire feeder 4 by a shield gas hose 10. Shielding gas from the shielding gas container 9 is fed to the welding torch 3 by means of the wire feeder 4 and the torch cable 7.

A robot controller 11 is provided to control the basic welding operation of the robot main unit 2. More specifically it controls starting and finishing of the welding process as well as the wire feed rate and the shielding gas supply.

A needle pulse controller 12 is provided for controlling the welding operation according to the method of this embodiment thus controlling also, at least partially, the welding robot 1 of figure 1. The term needle pulse is used in this application in the sense to express the specific welding method of this embodiment and the operation of the welding robot 1 and shall characterise the sequential generation and shutting off of the welding arc, i.e. welding arc is intermittently generated during one operation cycle for producing a weld or welding seam. The needle pulse controller 12 (which could also be designated as a stitch pulse controller) is connected to the robot main unit 2 by control cable 13 and is also connected to the power source unit 5 by a power cable 14. In the following the characteristics of the needle pulse controller 12 will be described. By the way said needle pulse controller 12 could also form a part of the afore-mentioned robot controller 11.

When welding start control is effected, the robot controller 11 energises an welding torch electrode 15 of the welding torch 3 through the wire 4 to produce a welding arc between said welding torch electrode 15 and the workpiece W and causes the welding arc to be maintained for a predetermined period of ON time,shuts off the welding arc and supplies shielding gas G to the molten area for a predetermined period of OFF time, moves the welding torch 3 for a predetermined period of moving time at normal (steady) moving speed and then again produces a new welding arc for performing a further welding operation. The afore indicated cycle is repeated several times.

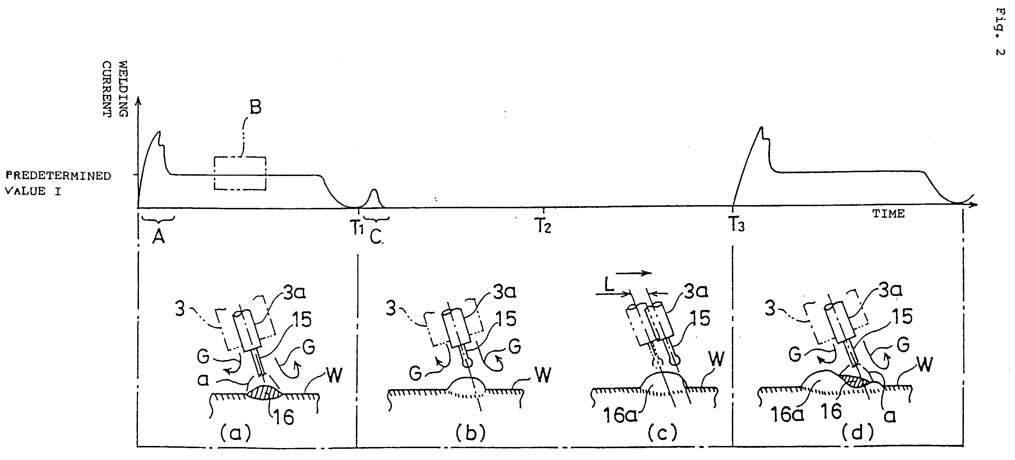

The needle pulse control 12 determines any welding anomalies when the wire 4 is melted and stuck to the welded workpiece material after the welding torch 3 is moved and interrupts the welding operation, if such an anomaly being detected. The welding operation is also interrupted in a similar manner when the welding arc is interrupted in the middle of an arc on time. In the following the characteristics of the needle pulse controller 12 and the operation of the welding robot 1 according to this embodiment will be described in further detail referring to figures 2 through 4 and 5.

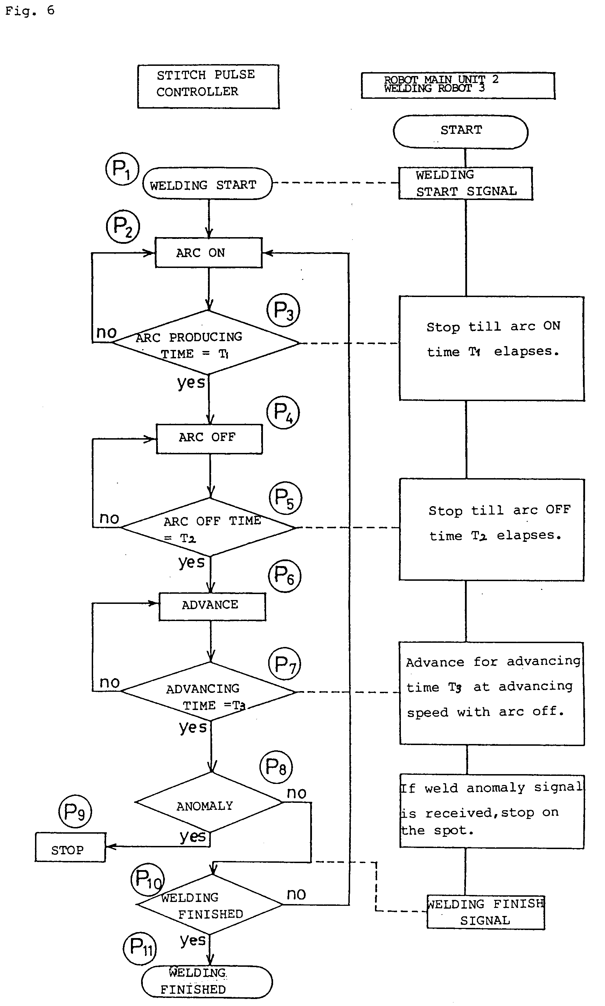

When a welding start signal is supplied from the robot controller 11 to the robot main unit 2 welding control is initiated in the needle pulse controller 12 by said signal as shown in step P₁ in figure 6.

As shown in this step P₂in figure 6, the needle pulse controller 12 produces a welding arc and starts welding. The welding control is then performed such that the welding current is made greater than a predetermined value I to produce a welding arc only for an instantaneous period of time (with the symbol A) as shown in the graph representing the amperage versus time as is indicated in the upper part of figure 2, and the welding current is lowered to the predetermined value I after the starting phase for initiating the welding arc is over and the welding arc generated.

As shown in figure 2 (a) the welding arc (a) is produced during welding between the workpiece material W and the tip of the wire 15, i.e. the welding torch electrode 15 protruding from an electrical conductor 3a of the welding torch 3 and the electrode 15 is melted to form a molten weld (welding seam) 16 on the welded workpiece material W. The shielding gas blown is indicated by the arrows G in figure 2(a). The shielding gas is blown out from the welding torch 3 at a preset constant rate throughout the welding operation. The shielding gas can also be supplied at different flow rates depending on the kinds of welding or can be stopped at any timing.

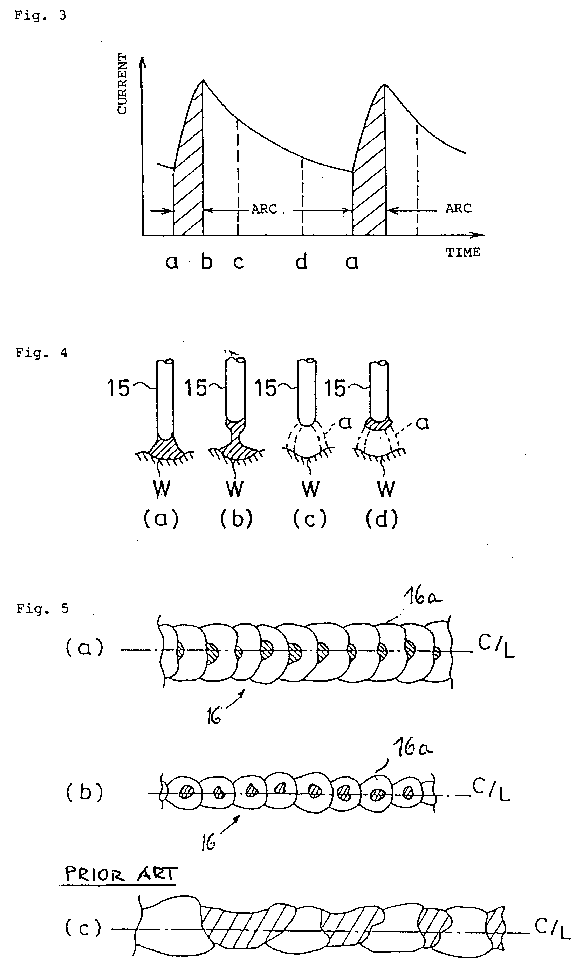

In the following the manner of welding arc generation during welding, i.e. during the arc on period of time shown with the symbol B in figure 2, i.e. in the graph showing the amperage versus time, is explained referring to figures 3 and 4. The welding current through the welding torch electrode 15 during welding varies as shown in figure 3. First the tip of the electrode 15 melts during the period between points a and b shown in figure 3 and comes into contact with the welded workpiece material W causing a short circuit and causing the welding current to rise rapidly. The change in the welding current while causing the short circuit is shown with the hatched areas in figure 3. The molten tip of the electrode 15, during short circuiting, assumes a shape as shown in figure 4(a). If the short circuit condition continues, the molten end portion of the welding torch electrode 15 assumes a constricted shape as shown in figure 4(b), forms a droplet and falls on the molten weld 16. At the time of welding the molten weld 16 is formed at the same position to form a molten metal weld with the molten part of the electrode 15.

Thereafter a welding arc is produced as shown in figure 4(c) and the welding current decreases gradually as shown with symbols b and d in figure 3. The tip of the electrode 15 melts again as shown in figure 4 (d) and thereafter again comes in contact with the workpiece material W as shown in figure 4 (a) to form another short circuit. These steps are repeated to perform the welding process. The period of time for performing the welding described above which is also designated in this application as "arc on time", is set according to the depth of the molten weld and the amount of molten metal, said arc on time is stored in the needle pulse controller 12 as time T₁. More specifically, the welding under the presence of the welding arc is continued during the period of time (called an arc generating time) after the welding arc is generated at the step P₂ up to the end of the arc on period T₁ step P₃ (see also timing T₁) figure 2). Here the robot main unit 2 and the welding torch 3 are brought to a resting condition from the timing when the welding arc is produced as shown in step P₂.

After the lapse of the arc on period T₁ from the initiation of the welding arc, the needle pulse controller 12 shuts off the welding current to end further welding arc generation as shown in step P₄ in figure 6. At this time the welding current is instantaneously stopped and briefly supplied automatically as shown by the symbol C on the graph of figure 2 indicating the welding current verses time.

After the breakdown of the welding arc the condition of non-welding is maintained for a predetermined period of "arc off time" as indicated through reference T₂. At that time the robot main unit 2 and the welding torch 3 are brought to a resting condition similar to that during welding. When the welding arc is turned off only shielding gas G is blown out from the welding torch 3 as shown in figure 2(b) at a pre-set flow rate necessary for cooling the weld so that the molten weld 16 is substantially cooled and solidified through the blow of shielding gas G.

Therefore, the arc off time T₂ described above is set to a value that brings the molten weld 16 to desired condition of solidification. Namely the solidification condition of the molten weld 16 can be controlled by adjusting the arc on time T₁ and the arc off time T₂. If the arc off time T₂ is too short the molten weld 16 is not solidified and, if said arc off is long, the molten weld 16 is solidified. The arc off time is stored as T₂ in the needle pulse controller 12.

In other words, after the welding arc is turned off in the step P₄ of figure 6 the condition after the welding is maintained until the period of time for cooling the molten weld 16 with the shielding gas G (that period is called arc off time) reaches the predetermined arc off time T₂ step P₅. When the arc off time T₂ has elapsed after the welding arc is turned off, the welding torch 3 is advanced or retracted in the step P₆ of figure 6. In this embodiment the method of advancing the welding torch 3 is described. Advancing the welding torch 3 performed by operating the robot main unit 2. The advancing distance is set by changing the period of time for which advancing takes place while maintaining the torch advancing speed by the robot main unit 2. The advancing speed can be changed as required by different programming.

When the welding torch 3 is to be advanced, the welding torch electrode 15 is positioned as shown in figure 2(c) to the peripheral side of a weld bead 16a formed by a solidification of the molten weld 16. In other words, the welding torch 3 in figure 2(c) is moved to the right by the distance L to position the tip of the electrode 15 to the front end of the weld bead 16a at the arc resuming point. In figure 2(b) the position of a conductor 3a before advancement is shown with a dash and double dotted lines while the advanced position is shown through solid lines. In this way cooling and solidification occur from the timing when the welding arc is turned off until to the timing when the welding torch 3 reaches the welding arc resuming point where the next welding arc is to be generated. As a result thereof heat input through the welded workpiece W is less in comparison to the welding by using a continuous arc relative to the workpiece material W. Since succeeding second weld bead 16a is overlapped onto the previous weld bead 16a partially, the strength of the weld (C) 16 is maximised. If the overlapping area is small the weld beads 16a are likely to be discontinued and, if the overlapping area is large, the welding beads 16a tend to be mount-shaped.

In other words, if the period of time required for advancing the welding torch 3 by the distance L as described above is assumed to be T₃, in figure 6 the welding torch 3 starts advancing in step P₆ and stops when the period T₃ has elapsed step P₇.

In the sense of this application, specifically with respect to figure 2 the same designations for the time or periods before a certain timing T₁, T₂, T₃ have been used as for those timing T₁, T₂, T₃ themselves. Accordingly, the welding arc on periods extends from the ignition of the welding arc to the timing T₁, the arc of time or period extends between the timings T₁ and T₂ and the period of advancing the welding torch 3 extends between the timings T₂ and T₃.

After advancing the welding torch 3 as indicated above, the needle pulse controller 12 performs an anomaly judgment in step P₈ of figure 6. At this time the welding current through the welding torch electrode 15 is detected. If the welding current is excessive, the wire or electrode 15 melts and sticks to the weld 16 and this condition is judged as anomalous and if such a condition is detected the robot main unit 2 is stopped in step P₉. An anomaly judgment routine is also provided between the steps P₂ and P₃ so that the robot main unit 2 is also stopped when the welding arc is interrupted.

When no anomaly is detected in step P₉ the routine proceeds to the step P₁₀ and it is judged therein as to whether or not a welding finishing signal is received from the robot controller 11. If such a signal is not received the routine returns to the step P₂ and repeats the steps as described above. In other words, as shown in figure 2(d) a new molten weld bead 16a is formed at the front end of the preceeding bead 16a of the weld 16. As a result the welding robot 1 repeats the conditions in which the welding is performed under the presence of a welding arc and the condition in which cooling and movement of the welding torch 3 is performed by repeated runs of the routine.

When a welding finishing signal is received in step P₁₀ the needle pulse controller 12 stops the robot main unit 2 in the step P₁₁ and finishes the welding operation.

Thus, when the welding is performed with the welding robot 1 of this embodiment a welding arc is produced intermittently with a succeeding new welding arc being generated on the preceeding weld bead 16a so that the welding is performed through a row of consecutive weld beads 16a. As a result the weld heat input to the welded workpiece W is reduced enabling and facilitating the welding of thin sheet metals together without damaging the welded workpiece material and the weld by the melting process.

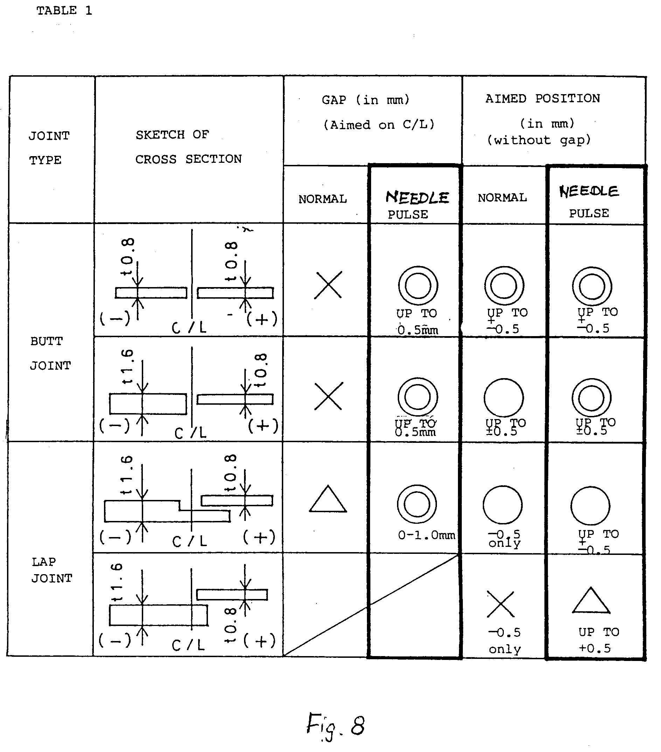

Table 1 as shown in figure 8 shows the results of welding tests of two thin sheet metals using the welding robot 1 and welding method of this embodiment.

The welding conditions reflected in the table 1 of figure 8 are as follows: welding current 50-60 A, welding voltage 17.6-19.2 V and with the arc on time T₁, the arc off time T₂ and the welding torch advancing time T₃ being set such that the welding speed is 20-25cm per minute. The wire 4 was of a diametre of 0.6mm. The welded workpiece material W was steal based thin sheet metal. The term NORMAL in the table 1 refers to the results under the same conditions for welded material which was welded by the known MAG welding process. The conditions for the known MAG welding process where welding current 37-54 A, welding voltage 16.5-17.6 V, welding speed 50cm-70cm per minute and identical wire 4.

The butt joints obtained by the conventional welding method as indicated by "NORMAL" in table 1 of figure 8 resulted in a melted hole if there was even a small gap between the sheet metals to be welded. The same joint welded by the welding robot 1 and the method of this embodiment (indicated as NEEDLE PULSE in table 1) caused no melting hole even if there was a small opening between the sheet metals. Lapping joints were possible by the conventional welding methods even if there was a small gap (of about 1mm), but undercuts were observed at many spots. The same joints provided by the welding robot 1 using the intermittent welding method according to this embodiment did not cause any of such undercuts.

The tolerance for the error in the aimed welding position (the welding start position) aimed at the line indicated as C/L in table 1, see also figure 5, proved to be greater for the welding process performed by the welding robot 1 according to this embodiment then by the conventional method, irrespective of the type of the joints.

Figure 5 shows the shapes of the welding beads 16a when two thin sheet metals are welded together. When the welding robot 1 according to this embodiment is used the welding beads 16a are regularly produced on both sides of the welded sheets as shown in figures 5(a)and 5(b). The scale-like pattern (ripples) in the figure becomes less clear when the arc off time T₂ is set shorter. The portions shown with hatching in figure 5(a) and 5(b) are slugs formed on the welding beads 16a. The slug or mass of impurities contained in the welding wire 4 appears mainly when steel or stainless steel is welded. When the welding is performed with the welding robot 1 the slugging masses are deposited in a row at approximately constant intervals because the welding operation takes place intermittently and the welding beads 16a are cooled between every welding operation. The hatched area shown in figure 5(b) are recesses (craters) on the welding beads 16a. The crater is formed as the welding bead is cooled from the periphery to the centre so that the centre area of the welding bead is pulled toward to periphery during cooling down and solidification. In other words the craters also appear at approximately constant intervals in a row when the welding method of this embodiment is applied through the welding robot 1. When welding is performed with the conventional method holes are likely to be produced and desirably as shown in figure 5(c) indicating a conventional pattern.

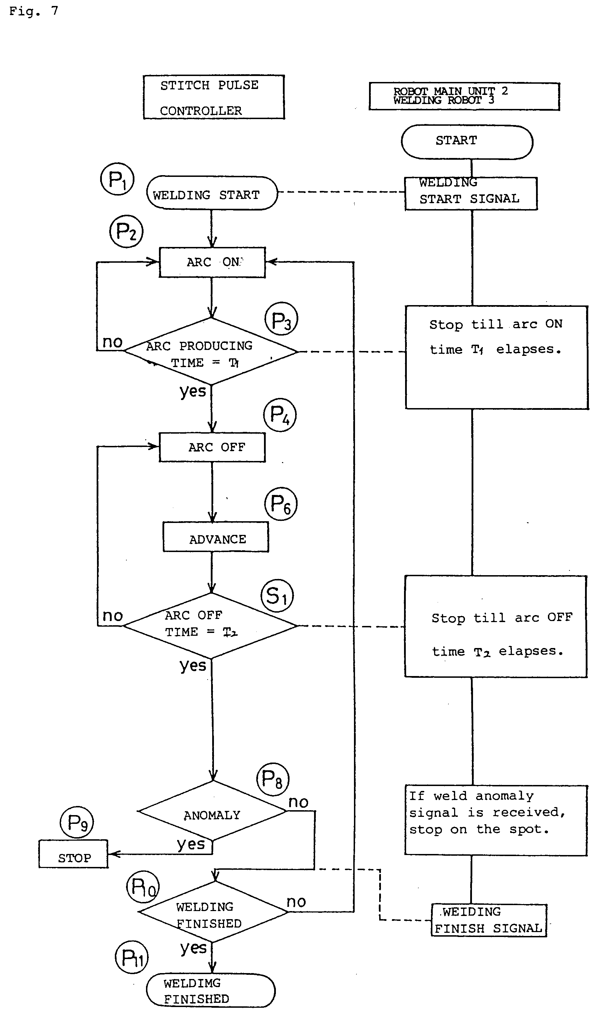

While in the welding method according to the embodiment described above the welding torch 3 is advanced when the arc of time T₂ elapses from turning off the welding arc, the welding torch 3 may also be advanced immediately after turning off the welding arc. Figure 7 is a flow chart of such an alternative embodiment for the welding method. In figure 7 the same or similar steps as those described in figure 6 are indicated with the same symbols and detailed description thereof is omitted. In the embodiment shown in figure 7 the routine procedure from the step P₄ with the welding arc is turned off to the step P₆ and the welding torch 3 is immediately advanced. When the control is performed this way, the arc off time T₂ is determined as the period of time for the molten weld bead 16a to solidify to a required state and simultaneously as the period of time required for the welding torch 3 to advance to the arc resuming point. In step S₁ following the step P₆ it is decided whether or not the arc off time has reached the value T₂.

In other words, this embodiment takes advantage of a low welding heat input when thin sheet metals are welded together by controlling the heat of the welded joint while the welding torch 3 is being advanced. Thus the time required until the welding is finished is reduced.

While in this embodiment the basics of the MAG welding method have been used as an example, the new welding method is not limited to the MAC but also MIG or TIG welding can be used basically.

The aforeindicated abbreviations have the following meaning:
- MAG:: active inert gas shielded metal arc welding,
- MIG:: inert gas shielded metal arc welding,
- TIG:: inert gas shielded tungsten arc welding.

Whilst steel based thin sheet metals are used as workpieces W in the embodiments described above, the welded workpiece material can be of different type and nature. Namely, MAG welding of materials such as cast iron or carbon steel requiring pre-heating or MIG welding of aluminum alloy sheet metals is also possible. Moreover, welding of metals having high thermal conductances such as cooper, aluminum, magnesium, etc. can be performed and welding of stainless steel, ferrite based-alloy, alloy of martensite family or alloys of precipitation hardening is also possible. Moreover, the welding of Titanium performed by TIG welding using a gas container or inert gas atmosphere can be performed using the basics of conventional TIG welding.

Moreover, although gas shielding is advantageous in view of facilitating mass production and improving the cooling of the workpiece means other than gas can be applied for shielding.

As described above, in the welding robot 1 performing the new welding method, the control unit 11 for controlling the welding operation of the robot main unit 2 is supplemented with control means 12 for introducing an intermittent welding means producing a welding arc for a predetermined period of time keeping the welding torch 3 for said during stationary to melt the workpiece W to be welded, stops the further generation of the welding arc when the predetermined duration elapsed and moves the welding torch 3 to the arc resuming point, preferably on the periphery of the preceeding welding bead 16a. As a result welding arcs are generated intermittently and the input of welding heat to the workpiece W is reduced.

Therefore thin sheet metals can be welded together without suffering melting damage or undercuts in the weld 16.

As an alternative it also possible to control the intermittent generation of a welding arc in terms of the amount of arc energy instead time or predetermined duration. In other words in an other embodiment of the present invention, the intermittent generation of the welding arc is performed in response to a predetermined amount of arc energy being obtained, said arc energy being then continuously calculated from the detected welding current and welding voltage. In this was the same effects for avoiding thermal overload of the workpiece W can be obtained.

When the welding robot 1 is used in welding on a vertical surface such welding can be performed without causing dripping of the molten weld due to the reduced heat input. Moreover, as succeeding welding arc can be produced partially over a previous weld bead when the welding process proceeds in the ascending direction further advantage is obtained in that direct damage of the workpiece W by melting etc. can be prevented.

## Claims

1. Welding method for welding metal workpieces, comprising generating a welding arc between a welding torch electrode (15) and the workpieces (W), preferably gas shielded arc welding method, wherein the welding arc is generated intermittently to compose a welding seam (16) from a row of consecutive welding beads (16a) partially overlapping one another, **characterized in that** the welding arc is generated and the welding bead (16a) is welded keeping the welding torch (3) with the welding torch electrode (15) stationary, said welding arc being shut off in response to a predetermined period of time (arc-on time) or alternatively a predetermined arc energy, and that the welding torch (3) is advanced to an arc resuming spot and that the welding arc generation then is restarted.

2. Welding method as claimed in claim 1, **characterized in that** said predetermined amount of welding arc energy is calculated from the welding current and welding voltage detected.

3. Welding method as claimed in claims 1 or 2, **characterized in that** the welding torch (3) is advanced to the arc resuming spot on a circumference line of the finished welding bead (16a).

4. Welding method as claimed in at least one of the preceding claims 1 or 2, **characterized in that** after welding a preceding welding bead (16a) and switching off the welding arc a next welding bead (16a) by switching on the welding arc again is welded at a predetermined distance (L) off-set from a preceding welding arc generation position which led to the preceding welding bead (16a).

5. Welding method as claimed in claim 4, **characterized in that** said predetermined distance (L) substantially corresponds to a radius of the welding bead (16a).

6. Welding method as claimed in at least one of the preceding claims 1 to 5 **characterized in that**, the welding torch (3) is moved for a predetermined moving time at a steady moving speed during an arc off time after switching off the welding torch (3).

7. Welding method as claimed in at least one of the preceding claims 1 to 6, **characterized in that**, the welding torch (3) is advanced towards next welding position after turning off the welding torch (3) either immediately after the switching off in parallel to the duration of an arc off time (T₂) or is advanced after the lapse of said arc off time (T₂) towards that next welding position.

8. Welding method as claimed in at least one of the preceding claims 1 to 7**, characterized in that** a flow of inert shielding gas (6) is continuously provided during both welding arc on time when the welding bead (16a) is welded and during welding arc off time between two consecutive welding beads (16a).

9. Welding robot comprising a robot main unit (2) having a welding torch (3) supporting a welding torch electrode (15), a source of electrical power (5) for generating a welding arc between said welding torch electrode (15) and a workpiece (W) which are moveable relative to each other, and a robot controller (11) for controlling the welding operation of the robot main unit (2) wherein a means is provided for intermittently generating and shutting-off a welding arc and storing a predetermined arc on time (T₁) and a predetermined arc off time (T₂), for performing a welding method as claimed in claim 1, **characterized in that** said means is a needle pulse controller (12) which is alternatively provided for intermittently generating a welding arc in response to a predetermined amount of arc energy calculated from the welding current and the welding voltage therein, wherein the welding arc is generated and the welding bead (16a) is welded keeping the welding torch (3) with the welding torch electrode (15) stationary, and in that the welding torch (3) is advanced to an arc resuming spot, by means of the robot main unit (2) preferably on a circumference line of the finished welding bead (16a) generated during the preceding welding operation, and in that means is provided for restarting then the welding arc generation.

10. Welding robot as claimed in claim 9, **characterized in that** source of shielded gas (G) is connected to the welding torch (3) to blow out the shield gas (G) to the area of welding arc generation.

## Patentansprüche

1. Schweißverfahren zum Schweißen von metallischen Werkstükken, bei dem ein Lichtbogen zwischen einer Schweißlampenelektrode (15) und einem Werkstück (W) erzeugt wird, vorzugsweise Schutzgasschweißverfahren, bei dem der Lichtbogen intermittierend erzeugt wird, um eine Schweißnaht aus einer Reihe aufeinanderfolgender Schweißpunkte (16a), die einander teilweise überlappen, zu erzeugen, **dadurch gekennzeichnet**, daß der Lichtbogen erzeugt und der Schweißpunkt (16a) geschmolzen wird, während die Schweißlampe (3) mit der Schweißlampenelektrode (15) stationär gehalten wird, der Lichtbogen in Abhängigkeit einer vorgegebenen Zeitdauer (Lichtbogeneinschaltzeit) oder alternativ einer vorgegebenen Lichtbogenenergie abgeschaltet wird und daß die Schweißlampe (3) zu einem Lichtbogen-Wiederaufnahmepunkt vorgerückt wird und daß die Lichtbogenerzeugung dann wieder gestartet wird.

2. Schweißverfahren nach Anspruch 1, **dadurch gekennzeichnet,** daß die vorgegebene Lichtbogenenergie aus dem Schweißstrom und der erfaßten Schweißspannung berechnet wird.

3. Schweißverfahren nach Anspruch 1 oder 2, **dadurch gekennzeichnet**, daß die Schweißlampe (3) zu einem Lichtbogen-Wiederaufnahmepunkt auf einer Umfangslinie des fertiggestellten Schweißpunktes (16a) vorgerückt wird.

4. Schweißverfahren nach zumindest einem der vorgenannten Ansprüche 1 oder 2, **dadurch gekennzeichnet,** daß nach dem Schweißen eines ersteren Schweißpunktes (16a) und dem Anschalten des Lichtbogens ein nächster Schweißpunkt (16a) durch Wiederanschalten des Schweißbogens in einem vorgegebenen Abstand (L) geschweißt wird, der von einer Lichtbogenerzeugungsstellung, die zu dem ersteren Schweißpunkt (16a) führte, beabstandet ist.

5. Schweißverfahren nach Anspruch 4, **dadurch gekennzeichnet,** daß der vorgegebene Abstand (L) im wesentlichen dem Radius des Schweißpunktes (16a) entspricht.

6. Schweißverfahren nach zumindest einem der vorhergenannten Ansprüche 1 bis 5, **dadurch gekennzeichnet,** daß die Schweißlampe (3) für eine vorgegebene Bewegungszeit unter einer festen Bewegungsgeschwindigkeit während einer Lichtbogenausschaltzeit nach dem Anschalten der Schweißlampe (3) bewegt wird.

7. Schweißverfahren nach zumindest einem der vorhergenannten Ansprüche 1 bis 6, **dadurch gekennzeichnet**, daß die Schweißlampe (3) nach dem Abschalten der Schweißlampe (3) in die nächste Schweißstellung vorgerückt wird, entweder unmittelbar nach dem Abschalten parallel zur Dauer der Bogenausschaltzeit (T₂) oder nach dem Ablauf der Bogenausschaltzeit (T₂).

8. Schweißverfahren nach zumindest einem der vorhergenannten Ansprüche 1 bis 7, **dadurch gekennzeichnet,** daß ein Strom inerten Schutzgases (6) sowohl während der Schweißbogeneinschaltzeit, wenn ein Schweißpunkt (16a) geschweißt wird, und während der Schweißbogenausschaltzeit zwischen zwei aufeinanderfolgenden Schweißpunkten (16a) kontinuierlich bereitgestellt wird.

9. Schweißroboter mit einer Roboterhaupteinheit (2), die eine Schweißlampe (3) aufweist, die wiederum eine Schweißlampenelektrode (15) hält, einer elektrischen Stromquelle (5) zur Erzeugung eines Lichtbogens zwischen der Schweißlampenelektrode (15) und einem Werkstück (W), die relativ zueinander bewegbar sind und einer Robotersteuerung (11) zur Steuerung des Schweißens durch die Roboterhaupteinheit (2), in der Mittel zur intermittierenden Erzeugung und Ausschaltung eines Lichtbogens und Speicherung einer vorgegebenen Bogeneinschaltzeit (T₁) und einer vorgegebenen Bogenausschaltzeit (T₂) vorgesehen sind, zur Durchführung eines Schweißverfahrens nach Anspruch 1, **dadurch gekennzeichnet,** daß dieses Mittel eine Nadelpulssteuerung (12) ist, die alternativ vorgesehen ist zur intermittierenden Erzeugung eines Lichtbogens in Abhängigkeit einer vorgegebenen Schweißbogenenergie, die aus dem Schweißstrom und der Schweißspannung in diesem berechnet wird, ein Lichtbogen erzeugt und ein Schweißpunkt (16a) geschweißt wird, während die Schweißlampe (3) mit der Schweißlampenelektrode (15) stationär ist, und daß die Schweißlampe (3) durch die Roboterhaupteinheit (2) zu einem Bogenwiederaufnahmepunkt vorgerückt wird, der vorzugsweise auf einer Umfangslinie des fertigen Schweißpunktes (16a), der in dem vorherigen Schweißvorgang erzeugt wurde, liegt, und daß Mittel zum Wiederstarten der Lichtbogenerzeugung vorgesehen sind.

10. Schweißroboter nach Anspruch 9, **dadurch gekennzeichnet,** daß ein Schutzgasvorrat (G) mit der Schweißlampe (3) verbunden ist, um dem Bereich der Lichtbogenerzeugung Schutzgas (E) zuzuführen.

## Revendications

1. Méthode de soudage pour souder des pièces métalliques, comprenant la formation d'un arc de soudage entre une électrode (15) de torche de soudage et les pièces (W), de préférence méthode de soudage à l'arc en atmosphère protectrice, dans laquelle l'arc de soudage est formé de façon intermittente pour composer une ligne de soudure (16) à partir d'une rangée de points de soudure consécutifs (16a) se chevauchant partiellement les uns les autres, caractérisée en ce que l'arc de soudage est formé et le point de soudure (16a) est soudé tout en maintenant la torche de soudage (3) avec l'électrode (15) de torche de soudage immobile, ledit arc de soudage étant interrompu en réponse à une période de temps prédéterminée (temps de formation d'arc) ou, selon une autre possibilité, à une énergie d'arc prédéterminée, et en ce que la torche de soudage (3) est avancée jusqu'à un point de reprise d'arc et en ce que la formation de l'arc de soudage est alors recommencée.

2. Méthode de soudage selon la revendication 1, caractérisée en ce que ladite quantité prédéterminée d'énergie d'arc de soudage est calculée à partir du courant de soudage et de la tension de soudage détectés.

3. Méthode de soudage selon la revendication 1 ou 2, caractérisée en ce que la torche de soudage (3) est avancée jusqu'au point de reprise d'arc sur une ligne circonférentielle du point de soudure terminé (16a).

4. Méthode de soudage selon au moins l'une des précédentes revendications 1 ou 2, caractérisée en ce qu'après le soudage d'un point de soudure précédent (16a) et l'extinction de l'arc de soudage, un point de soudure suivant (16a) est soudé, par réamorçage de l'arc de soudage, à une distance prédéterminée (L) décalée par rapport à une position précédente de formation d'arc de soudage qui a conduit au point de soudure précédent (16a).

5. Méthode de soudage selon la revendication 4, caracterisée en ce que ladite distance prédéterminée (L) correspond sensiblement à un rayon du point de soudure (16a).

6. Méthode de soudage selon au moins l'une des précédentes revendications 1 à 5, caractérisée en ce que la torche de soudage (3) est déplacée pendant un temps de déplacement prédéterminé à une vitesse de déplacement constante pendant un temps d'arrêt d'arc après extinction de la torche de soudage (3).

7. Méthode de soudage selon au moins l'une des précédentes revendications 1 à 6, caractérisée en ce que la torche de soudage (3) est déplacée en direction d'une position de soudage suivante après extinction de la torche de soudage (3) soit immédiatement après l'extinction en parallèle à la durée d'un temps d'arrêt d'arc (T₂) soit est avancée après l'intervalle dudit temps d'arrêt d'arc (T₂) en direction de la position de soudage suivante.

8. Méthode de soudage selon au moins l'une des précédentes revendications 1 à 7, caractérisée en ce qu'un courant de gaz protecteur inerte (6) est envoyé de façon continue à la fois pendant le temps de formation d'arc lorsque le point de soudure (16a) est soudé et pendant le temps d'arrêt d'arc entre deux points de soudure consécutifs (16a).

9. Robot de soudage comprenant un bloc principal de robot (2) comportant une torche de soudage (3) supportant une électrode (15) de torche de soudage, une source d'énergie électrique (5) pour former un arc de soudage entre ladite électrode (15) de la torche de soudage et une pièce (W) qui peuvent se déplacer l'une par rapport à l'autre, et un dispositif (11) de commande de robot pour commander l'opération de soudage du bloc principal de robot (2), dans lequel un moyen est prévu pour former et éteindre de façon intermittente un arc de soudage et pour stocker un temps prédéterminé de formation d'arc (T₁) et un temps prédéterminé d'arrêt d'arc (T₂), pour effectuer une méthode de soudage telle que revendiquée dans la revendication 1, caractérisé en ce que ledit moyen est un dispositif (12) de commande d'impulsion par points qui est selon une autre possibilité prévu pour former de façon intermittente un arc de soudage en réponse à une quantité prédéterminée d'énergie d'arc calculée à partir du courant de soudage et de la tension de soudage présents, dans lequel l'arc de soudage est formé et le point de soudure (16a) est soudé tout en maintenant la torche de soudage (3) avec l'électrode (15) de torche de soudage immobile, et en ce que la torche de soudage (3) est avancée jusqu'à un point de reprise d'arc, au moyen du bloc principal de robot (2), de préférence sur une ligne circonférentielle du point de soudure terminé (16a) formé pendant l'opération de soudage précédente, et en ce qu'un moyen est prévu pour recommencer alors la formation de l'arc de soudage.

10. Robot de soudage selon la revendication 9 , caractérisée en ce qu'une source de gaz inerte (G) est reliée à la torche de soudage (3) pour envoyer le gaz inerte (G) sur la région de formation de l'arc de soudage.
